# EUROPÄISCHE PATENTANMELDUNG

(11) **EP 4 497 918 A1**
(43) Veröffentlichungstag der Anmeldung: **29.01.2025**
(21) Anmeldenummer: 24190621.3
(22) Anmeldetag: 24.07.2024
(51) Int. Cl.: F02B 19/12

(54) **VERFAHREN ZUR HERSTELLUNG EINES VERBRENNUNGSMOTORS MIT VORKAMMER**

(30) Priorität: 28.07.2023 CH 8212023
(71) Anmelder: Liebherr Machines Bulle SA, 1630 Bulle (CH)
(72) Erfinder: Fragnière, Olivier, 1791 Courtaman (CH); Ricca, Fabio, 1009 Pully (CH)
(74) Vertreter: von Tietzen und Hennig, Nikolaus

(57) **Zusammenfassung**

Die Erfindung betrifft ein Verfahren zur Herstellung eines Verbrennungsmotors, insbesondere eines Gasmotors, mit Vorkammer und einer in die Vorkammer hineinragenden Zündvorrichtung sowie einem der Vorkammer Kraftstoff zuführenden Vorkammer-Injektor, dadurch gekennzeichnet, dass ein Vorkammer-Modul mit integralem, die Vorkammer bildenden Hohlraum als zum Zylinderkopf separates Bauteil gefertigt wird, wobei das Vorkammer-Modul neben dem das Vorkammervolumen bildenden Hohlraum wenigstens einen Überströmkanal zur fluidischen Verbindung zwischen Vorkammer und Hauptbrennraum aufweist und das Vorkammer-Modul als Ganzes oder zumindest teilweise mittels eines additiven Verfahrens, insbesondere per 3D-Druck, erzeugt wird.

## Beschreibung

Die Erfindung betrifft ein Verfahren zur Herstellung eines Verbrennungsmotors, insbesondere eines Gasmotors, mit Vorkammer und einer in die Vorkammer hineinragenden Zündvorrichtung sowie einem der Vorkammer Kraftstoff zuführenden Vorkammer-Injektor.

Vorbekannt sind Brennraum-Einheiten mit aktiver Vorkammer in drei unterschiedlichen Ausbaustufen. Die als erste bekannte und am weitesten verbreitete Variante - im Folgetext als Konzept I bezeichnet - betrifft eine aktive Vorkammer, die lediglich die Funktion eines Zündverstärkers ausübt. Eine zweite Variante entspricht einer Brennraum-Einheit, in deren Hauptbrennraum lediglich über einen einzigen, über die aktive Vorkammer erstreckenden Pfad Kraftstoff zugeführt werden kann. Diese Variante wird Fortan als Konzept II bezeichnet. Darüberhinausgehend sind Brennraum-Einheiten mit aktiver Vorkammer bekannt, die wahlweise eine Kraftstoffzuführung über die aktive Vorkammer oder alternativ über einen zweiten Kraftstoffpfad bspw. mittels einer Saugrohreinspritzung ermöglichen. Eine entsprechende Ausführungsform, bei der bauartbedingt die Haupteinspritzung zur Abdeckung des im Hauptbrennraum erforderlichen Kraftstoffbedarfs nur innerhalb eines gewissen Teilbereichs des Motorarbeitsbereichs vollständig entlang des sich über die Vorkammer erstreckenden Kraftstoffpfads erfolgen kann, soll im Folgetext als Konzept IIIa bezeichnet werden. Eine entsprechende Ausführungsform, bei der obgleich des Vorhandenseins eines sich über den Saugeingang erstreckenden Kraftstoffpfades der sich über die Vorkammer erstreckende Kraftstoffpfad entsprechend ausgelegt ist, dass der Verbrennungsmotor innerhalb seines gesamten Drehzahl-Drehmoment-Arbeitsbereichs ausnahmslos über die Vorkammer erfolgen kann, soll im Folgetext als Konzept IIIb bezeichnet werden.

Rein konzeptionell, d.h. aus einer Schaltbildperspektive, erscheint die Umsetzung dieser Konzepte recht einfach zu sein. Tatsächlich ist die konstruktive Umsetzung für heutige Motoren mit ihrer entsprechend hohen Leistungsdichte nicht trivial. Eine entsprechend ausreichende Energiemenge aus der primären Zündeinheit kommend muss sich stets funktionsgerecht und demgemäß reproduzierbar in der Vorkammer ausbreiten und zwar zur Sicherstellung, dass der Zündvorgang des sich innerhalb der Vorkammer befindenden Kraftstoff-Luftgemisches zuverlässig abläuft und anforderungsgemäß reproduzierbar ist. Ferner muss die Vorkammer derart positioniert sein, dass die durch den innerhalb der Vorkammer auftretenden Zündvorgang in den Hauptbrennraum überschießenden und noch brennenden oder bereits erloschenen Zündfackeln - aber noch eine hohe thermische Energie aufweisend - sich in einer koordinierten, d.h. einer sozusagen synchronen Art und Weise, im Hauptbrennraum ausbreiten. Nur so stellt sich innerhalb des Hauptbrennraums eine gleichmäßige Ausbreitung der Flammenfront ein.

Aus der US2017/122184 A1 ist bereits ein Motorkonzept bekannt, welches eine aktive Vorkammer vorsieht. Die mit einer aktiven Vorkammer versehene Brennraumeinheit soll derart ausgeführt sein, dass eine bewusst herbeizuführende Kraftstoffzuführung in den Hauptbrennraum über denjenigen Injektor erfolgen kann, der Kraftstoff in die Vorkammer einleitet. Die Lehre der US2017/122184 A1 lässt jedoch ein konkretes Beispiel dafür vermissen, wie die Integration einer solchen aktiven Vorkammer in einen einsatzfähigen Verbrennungsmotor tatsächlich ausgeführt werden kann.

Aufgrund allgemein hin bekannter Anforderungen und bestimmter Vorteile weisen die heutigen Verbrennungsmotoren eine hohe Leistungsdichte auf und zwar sowohl hinsichtlich der auf das Gesamthubraumvolumen bezogenen als auch hinsichtlich der auf die Außenabmessungen eines Verbrennungsmotors bezogenen Leistungsdichte und ebenso hinsichtlich der gewichtsbezogenen Leistungsdichte. Ferner verfügen heutige Verbrennungsmotoren zumeist aufgrund bestimmter Vorteile nicht über einzelne, sondern über Einlass-/Auslassventilpaare. Quasi namensgebend ist bei fremdgezündeten Verbrennungsmotoren das Heranführen der Zündenergie erforderlich. Im Fall eines Vorkammermotors muss die äußere, d.h. primäre Zündenergie klarerweise in die Vorkammer eingebracht werden, weswegen sich bestimmte Funktionselemente der primären Zündvorrichtung innerhalb der Vorkammer bzw. im unmittelbaren Nahbereich der Vorkammer befinden müssen.

Zudem muss eine aktive Vorkammer über einen eigenen Kraftstoffzuführungspfad verfügen, was die Integration nochmals anspruchsvoller gestaltet. Sofern das Motorkonzept vorsieht, dass die Haupteinspritzung in den Hauptbrennraum innerhalb des gesamten Drehzahl-Drehmoment-Betriebsbereichs oder zumindest eines gewissen Teilbereichs davon über den sich über die Vorkammer erstreckenden Kraftstoffpfad erfolgen soll, dann beschränkt sich die Integration einer solchen entsprechend funktionsfähigen und zuverlässigen aktiven Vorkammer, durch deren Anwendung die konzeptionell erkennbaren Vorteilspotenziale tatsächlich in einem einsatzfähigen Produkt real zur Geltung kommen, nicht auf eine einfache Bauteilintegration, sondern erfordert stattdessen einen hohen Entwicklungsaufwand. Dies betrifft die Anordnung und Gestaltung der Geometriemerkmale der Vorkammer und der Überströmkanäle sowie die konkrete Umsetzung der jeweiligen Zuführung des Kraftstoffes und der primären Zündenergie in die aktive Vorkammer.

Die Verfügbarkeit entsprechender Brennraumeinheiten erlaubt die Produktion volleinsatztauglicher entsprechender Vorkammermotoren unter Beibehaltung des bereits bestehenden Rumpfmotor-Aufbaus. Es ist wünschenswert, dass der betreffende Unterschied zwischen einem Bestandsmotor und dem daraus abgeleiteten Vorkammermotor derart gering ist, dass eine vollständige Gleichheit der Schnittstellen (s.u.) zwischen einem bereits bestehenden und einem daraus abgeleiteten erfindungsgemäßen Verbrennungsmotor vorliegt; zumindest sofern Letztere ihre Basisausführung aufweist.

Der Begriff Schnittstellen soll bspw. folgendes inkludieren:
- mechanische Verbindungen zur Fixierung des Verbrennungsmotors und solchen an dem Basismotor angebauten Komponenten und Vorrichtungen die Fixierung und die Drehmomentübertragung betreffend
- Verbindungen zum Verbrennungsmotor für zu- und abströmende Fluide z.B. Luft, Abgas, Kraftstoff, Schmier- und Kühlmedien etc.

Auf diese Weise wird erreicht, dass
- die Entwicklungsarbeiten für einen erfindungsgemäßen Verbrennungsmotor möglichst gering sind, sofern bereits ein entsprechender Bestandsmotor existiert oder sogar bereits ein solcher industrialisiert ist.
- die Integration des resultierenden Verbrennungsmotors in ein übergeordnetes System (z.B. eine mobile Arbeitsmaschine, ein Straßenfahrzeug oder in einem stationären System) einen möglichst geringen Aufwand erfordert, sofern in einem solchen bereits ein entsprechender Bestandsmotor zur Anwendung kommt bzw. solche entsprechenden Entwicklungsfortschritte zur Erreichung dieser Zielsetzung vorliegen.

Das Erreichen der vorgenannten Zielsetzungen soll im Idealfall sogar den Umbau eines bereits in seiner bestimmungsgemäßen Nutzung befindenden Bestandsmotors erlauben.

Im Fall einer auszuführenden Motor-Neukonstruktion soll diese bezogen auf einem vergleichbaren, dem heutigen Standard entsprechenden Verbrennungsmotor das gleiche charakteristische Volumenverhältnis zwischen (i) dem Gesamthubraum aufweisen und (ii) bezugnehmend auf den Motorrumpf in etwa die gleichen oder bevorzugt geringere Außenmaße aufweisen. Demnach muss insbesondere der Abstand zwischen jeweils zwei sich auf derselben Zylinderbank befindenden und dabei unmittelbar benachbarten Brennräumen entsprechend des heutigen Standards klein bemessen sein und gleichermaßen die Leistungsdichte eines jeden Brennraumes entsprechend hoch bemessen sein. Demzufolge stehen jeweils lediglich vergleichsweise kleine Querschnittsflächen zur Verfügung über die der tatsächlich funktionstüchtige Kraftstoffzuführungspfad und der Zündpfad an die betreffende Vorkammer herangeführt werden muss.

Die vorliegende Erfindung betrifft die Konstruktion bzw. Modifikation einer Brennraumeinheit, die zusätzlich zu den heutigen Standardfunktionen, die über solche dem Stand der Technik entsprechenden Bestandteile erwirkt werden können, eine aktive Vorkammer aufweist. Die Integration der aktiven Vorkammer soll derart ausgeführt werden, dass für den Aufbau eines vollfunktionsfähigen Verbrennungsmotors auf einen bereits bestehenden Aufbau eines Verbrennungsmotors zurückgegriffen werden kann und die hierbei notwendigen Modifikationen weitestgehend auf solche Maßnahmen beschränkt werden, die unmittelbar dadurch bedingt sind, dass es sich um einen Verbrennungsmotor handelt, der aus solchen Brennraumeinheiten besteht, die jeweils über aktive Vorkammern verfügen.

Gelöst wird diese Aufgabe durch ein Verfahren zur Herstellung eines Verbrennungsmotors mit Vorkammer gemäß den Merkmalen des Anspruchs 1. Vorteilhafte Ausführungen des Verfahrens sind Gegenstand der abhängigen Ansprüche. Ferner wird die Erfindung durch einen Verbrennungsmotor gelöst, der nach dem erfindungsgemäßen Verfahren hergestellt ist.

Erfindungsgemäß wird der Verbrennungsmotor mit einem Vorkammer-Modul gefertigt, das als separates Bauteil zum Zylinderkopf hergestellt wird. Das Vorkammer-Modul umfasst den die Vorkammer bildenden Hohlraum, wodurch über das im Zylinderkopf eingebaute Vorkammer-Modul ein definiertes Vorkammervolumen vorhanden ist. Dabei wird vorgeschlagen, das Vorkammer-Modul umfassend den das Vorkammervolumen bildenden Hohlraum sowie wenigstens einen Überströmkanal zur fluidischen Verbindung zwischen Vorkammer und Hauptbrennraum per 3D-Druckverfahren oder mittels eines anderen additiven Verfahrens herzustellen. Da an die geometrische Ausgestaltung des Vorkammervolumens üblicherweise hohe Anforderungen an Maßeinhaltung und Oberflächengüte gestellt werden, wird für das besagte Bauteil ein Fertigungsverfahren eingesetzt, unter dessen Anwendung sich jene hohen Anforderungen erfüllen lassen. Diese bestehen nicht nur bezüglich der Ausgestaltung des Vorkammervolumens, sprich der des Hohlraums, sondern auch für die Ausführung etwaiger Überströmkanäle, die in einer entsprechenden Wandung des Vorkammer-Moduls eingebracht werden, und die nach dem Einbau des Vorkammer-Moduls die Verbindung zwischen dem die Vorkammer bildenden Hohlraum und dem betreffenden Hauptbrennraum darstellen. Auch die Ausgestaltung und Kanalführung derartiger Überströmkanäle ist entscheidend für das funktionale Zusammenwirken der Vorkammer und dem Hauptbrennraum.

Gemäß einer vorteilhaften Ausführungsform der Erfindung kann vorgesehen sein, dass das Vorkammer-Modul auch als Träger zur Aufnahme des Vorkammer-Injektors und/oder einer Zündvorrichtung bspw. in der Ausführung einer Zündkerze für die Zündung des Luft-Kraftstoffgemisches innerhalb der Vorkammer dient. Dies ermöglicht beispielsweise eine Herstellung und Montage eines Verbrennungsmotors, indem das Vorkammer-Modul vorgefertigt und vor dem Einbau in den Zylinderkopf mit dem Vorkammer-Injektor und/oder der Zündvorrichtung bestückt wird. Das vollständig bestückte Vorkammer-Modul lässt sich dann als kompakte Einheit in den Zylinderkopf des Verbrennungsmotors einsetzen. Dadurch wird der Einbau der Zündvorrichtung sowie des Vorkammer-Injektors vereinfacht, da dieser außerhalb des Zylinderkopfes erfolgen kann. Ebenso ermöglicht die vorgeschlagene Vorgehensweise einen Funktionstest noch bevor das Modul in den Zylinderkopf eingebaut wird.

Es kann vorgesehen sein, dass der Vorkammer-Injektor nicht unmittelbar in den Hohlraum des Vorkammer-Moduls mündet, sondern stattdessen die betreffende Fluidverbindung zwischen dem Auslass des Vorkammer-Injektors zu dem der Vorkammer entsprechenden Hohlraum über einen im Vorkammer-Modul vorhandenen Verbindungskanal besteht. Im einfachsten Fall kann der Verbindungskanal über die gesamte Länge zylindrisch ausgeführt werden. Vorstellbar ist jedoch auch eine Ausführung mit sich in Längsrichtung ändernder Profilform. Idealerweise wird der Verbindungskanal mit wenigstens einem konisch ausgestalteten Abschnitt ausgeführt, insbesondere mit einem sich in Richtung des Hohlraums reduzierendem Kanaldurchmesser. Eine solche Ausführung des Verbindungskanals kann das Auftreten des unerwünschten Effektes des Backfirings von der Vorkammer in Richtung des Vorkammer-Injektors effektiv verhindern bzw. minimieren.

Von Vorteil ist es ebenso, wenn die Kanalform derart ausgeformt wird oder mit passenden Leitelementen versehen wird, so dass eine Verwirbelung des in den Hohlraum zugeführten Kraftstoffes aktiv erzeugt bzw. begünstigt werden. Verwirbelungen im Einlassbereich der Vorkammer verbessern die Vermischung des eingespritzten Kraftstoffes mit dem in der Vorkammer vorgehaltenen Luftgemisch. Der Verbindungskanal kann einen geradlinigen Verlauf haben, vorstellbar ist jedoch auch eine Fertigung mit abschnittsweise gekrümmtem bzw. gewinkeltem Verlauf, wobei sich die Bahnkurve, über die sich die Krümmung erstreckt, vorzugsweise in einer Ebene befindet. Auch dies kann eine bessere Homogenität des Kraftstoffluftgemisches innerhalb der Vorkammer begünstigen. Denkbar ist ebenfalls eine Fertigung des Verbindungskanals mit einem zumindest abschnittsweise helixförmigem Kanalverlauf. Durch die spiral- bzw. wendelartige Kanalführung wird automatisch eine Verwirbelung des in den Hohlraum eintretenden Kraftstoffes erzeugt bzw. verstärkt. Ausreichend kann ein Viertel oder eine Hälfte einer vollständigen Wendelform sein. Insbesondere aufgrund der Fertigung per 3D-Druck oder mittels eines anderen additiven Verfahrens kann die Kanalform des Verbindungskanals unter einer besonders geeigneten Ausnutzung der vorgenannten Aspekte optimiert werden, um eine optimale Vermischung des jeweils momentan in die Vorkammer zugeführten Kraftstoffes mit der sich darin befindenden Luft bzw. dem sich bereits darin befindlichen Gasgemisch zu begünstigen.

Gemäß einer vorteilhaften Ausgestaltung der Erfindung wird vorgeschlagen, das Vorkammer-Modul zwei- oder mehrteilig zu fertigen. Ein erstes Bauteil des Vorkammer-Moduls umfassend den das Vorkammervolumen bildenden Hohlraum und den wenigstens einen Überströmkanal wird vorzugsweise per 3D-Druck bzw. ein additives Verfahren hergestellt, während wenigstens ein weiteres Bauteil, welches ein Bestandteil des Vorkammer-Moduls ist, mittels eines davon abweichendem Verfahren hergestellt wird. Jene wenigstens zwei Bauteile werden in einem nachgelagerten Schritt zusammengefügt. Da an die geometrische Ausgestaltung des Vorkammervolumens und den wenigstens einen Überströmkanal hohe Anforderungen an Maßeinhaltung und Oberflächengüte gestellt werden, wird das erste Bauteil mittels 3D-Druck erstellt. Ein weiteres Bauteil des Vorkammer-Moduls, das weder diesen Hohlraum noch einen der Überströmkanäle umfasst, kann stattdessen mit einem abweichenden Fertigungsverfahren hergestellt werden, da bezüglich der weiteren Bauteile des Vorkammer-Moduls geringere Anforderungen an Maßeinheit und Oberflächengüte gestellt werden. Aus ökonomischen Gründen kann daher der Rückgriff auf ein kostengünstigeres Herstellungsverfahren für diese weiteren Bauteile zweckmäßig sein. Denkbar sind bspw. konventionelle subtraktive Fertigungsverfahren. Die mehrteilige Ausgestaltung des Vorkammer-Moduls hat zudem den Vorteil, dass Einzelbestandteile jenes Moduls, die einem verhältnismäßig hohem Verschleiß unterliegen, separat austauschbar sind. Hohem Verschließ unterliegen bspw. die Überströmkanäle und auch der Hohlraum, so dass das vorgenannte erste Bauteil bei Bedarf oder im Rahmen einer primär anderweitig erforderlichen Wartung oder Reparatur bereits präventiv im Zuge einer anderweitig erforderlichen Wartung austauschbar ist.

Zur Erzielung eines funktional hochwertigen hochwertigen Produkts können auch an den zuvor genannten Verbindungskanal hohe Anforderungen an die Maßeinhaltung und die Oberflächengüte gestellt sein, sodass es in diesem Zusammenhang zweckmäßig ist, wenn auch der den Verbindungskanal aufweisende Bestandteil des Vorkammer-Moduls mittels eines additiven Verfahrens insbesondere per 3D-Druck gefertigt wird. Dies gilt umso mehr, wenn der Verbindungskanal in einer funktional besonders vorteilhaften Ausführung eine spezielle Kanalführung aufweist, bspw. ein abgewinkelter oder zumindest abschnittsweise gekrümmter und/oder wendelförmiger Verlauf vorliegen soll und/oder auch zumindest abschnittsweise mit einer in Bezug auf die Längsrichtung konischen Kanalkontur versehen ist. Insbesondere ist der Verbindungskanal in das erste Bauteil integriert, das neben dem die Vorkammer bildenden Hohlraum auch den wenigstens einen Überströmkanal umfasst.

Bevorzugt werden diejenigen weiteren Bauteile des Vorkammer-Moduls, denen lediglich eine tragende oder zur Fixierung dienende Funktion zukommt, mittels des abweichenden Fertigungsverfahrens gefertigt. Bspw. umfassen solche weiteren Bauteile die notwendigen Aufnahmebohrungen für den Einsatz des Vorkammer-Injektors und/oder der Zündvorrichtung. Die zu fertigenden Aufnahmen gestatten höhere Fertigungstoleranzen, weshalb solche Bestandteile des Vorkammer-Moduls mittels subtraktiver Herstellungsverfahren gefertigt werden können. Dies gilt gleichermaßen für Bestandteile bzw. Teilbereiche des Vorkammer-Moduls, die Anlageflächen und Fixierungsmittel zur Montage und Befestigung des Vorkammer-Moduls am Zylinderkopf aufweisen.

Unabhängig davon, ob das Vorkammer-Modul ein- oder mehrteilig ausgestaltet wird, erfordert die Herstellung des Vorkammer-Moduls die Einbeziehung von 3D-Druck. Es bietet sich auch die Anwendung eines kombinierten 3D-Druckverfahrens an, das bei der Herstellung eine Anwendung unterschiedlicher 3D-Druckverfahren vorsieht. Bspw. können sich die 3D-Druckverfahren hinsichtlich der eingestellten Maschinenparameter der 3D-Druckanlage unterscheiden und/oder hinsichtlich der dafür verwendeten Werkstoffe. Denkbar ist es auch, dass beim kombinierten 3D-Druckverfahren unterschiedliche Teilbereiche des Vorkammer-Moduls mittels unterschiedlicher 3D-Druckverfahren erstellt werden. Möglich ist es jedoch auch, dass ein einziger Teilbereich mittels unterschiedlicher 3D-Druckverfaheren erstellt wird, indem die 3D-Druckverfahren zeitlich nacheinander und/oder mit zwei resp. mehreren separaten Vorrichtungen, über die das Auftragen der jeweiligen Materialien erfolgt, ausgeführt werden. Bspw. kann ein 3D Druckverfahren mittels einer bestimmten Konstellation (den verwendeten Werkstoff des Auftragsmaterials, die anteilsmäßige Zusammensetzung des Auftragsmaterials, die eingestellten Maschinenparameter, usw.) mit Blick auf die Druckgeschwindigkeit, der Materialkosten oder der Präzision etc. variiert werden. Denkbar ist es bspw. zunächst mit einem schnelldruckenden 3D-Druckverfahren zu arbeiten, das einen raschen und/oder kostengünstigen Volumenaufbau ermöglicht. Im Nachgang oder zwischenzeitlich kann dann zur Einhaltung der jeweils erhöhten spezifischen Anforderungen mit einem langsameren und/oder einem anderweitig bedingt kostenintensiveren 3D-Druckverfahren nachgearbeitet werden, durch dessen Anwendung bspw. eine höhere Präzision der Maßeinhaltung oder eine höhere Oberflächengüte erzielbar ist.

Vorstellbar ist es ebenfalls, dass unabhängig von einer ein- oder mehrteiligen Ausführung des Vorkammer-Moduls mit einem Hybridverfahren gearbeitet wird, das neben einem 3D-Druckverfahren wenigstens ein alternatives Herstellungsverfahren, bspw. ein subtraktives Herstellungsverfahren einsetzt bspw. Polieren oder Läppen. Wie bereits zuvor angedeutet, lassen sich unterschiedliche Teilbereiche des Vorkammer-Moduls mittels verschiedener unterschiedlicher Verfahren herstellen, worüber Vorteile erzielbar sind bspw. eine Reduzierung der Herstellungskosten und/oder eine differenziert auf die bestehenden Produktanforderungen zielgerichtete Produktqualität. Vorstellbar ist es aber auch, dass ein identischer Teilbereich mittels unterschiedlicher Verfahren in wenigstens zwei Etappen bearbeitet wird. Bspw. kann zunächst mittels eines subtraktiven Verfahrens ein bestimmter Teil eines Bauteils angefertigt werden, wohingegen in Bezug auf das fertiggestellte Bauteil die Erzeugung anderer Teilbereiche mittels 3D-Druckverfahren erfolgt, weil eine Gesamtherstellung unter einer ausschließlichen Verwendung, da bspw. einerseits das Herstellen unter eines alleinigen Einsatzes von subtraktiven Verfahren überhaupt nicht möglich ist, derweil die Gesamtherstellung unter einer ausschließlichen Verwendung eines oder der Kombination mehrerer 3D-Druckverfahren zu deutlich höheren Kosten führen würde. Vorzugsweise handelt es sich bei dem Teilbereich, der unter Nutzung eines 3D-Druckverfahrens fertiggestellt wird, um den Bereich mit den höheren Anforderungen an die Maßgenauigkeit und/oder Oberflächengüte. Ein Vorteil jener Verfahren ist, dass sich die Abdichtung zwischen den Teilbereichen, aus denen sich das Vorkammer-Modul zusammensetzt, bereits nach der Fertigstellung naturgemäß ergibt und nicht erst durch ein Dichtungssystem herbeigeführt werden muss.

Es kann sinnvoll sein, dass bei der Bearbeitung eines Teilbereichs des Vorkammer-Moduls mittels kombiniertem 3D-Druck und/oder mittels Hybridverfahren eine Pufferschicht aufgetragen wird, um eine bessere Bindung zwischen den Schichten zu erzielen. Bevorzugt wird eine solche Pufferschicht ebenfalls per 3D-Druckverfahren aufgetragen. Bspw. kann es vorteilhaft sein, dass auf einem bestehenden Bauteilrohling des Vorkammer-Moduls, der mittels eines anderen Herstellungsverfahrens, wie bspw. mittels eines subtraktiven Verfahrens, hergestellt worden ist, in einem Nachfolgeschritt eine Pufferschicht zumindest bereichsweise und vorzugsweise per 3D-Druck aufgebracht wird, bevor in einem nachgelagerten Schritt eine Fortführung der Fertigung mittels 3D-Druck erfolgt. Der 3D-Druck erfolgt dann zumindest teilweise auf jener Pufferschicht. Vorstellbar ist es ebenso, eine Pufferschicht zumindest bereichsweise auf einem Bauteilrohling des Vorkammer-Moduls aufzubringen, der zumindest teilweise unter Einsatz von 3D-Druck hergestellt worden ist. Im Anschluss kann dann weiteres Volumen mittels 3D-Druck, vorzugsweise mittels eines abweichenden 3D-Druckverfahrens, zumindest auf den mit der Pufferschicht versehenden Teilbereich aufgebracht werden. Vorsorglich wird darauf hingewiesen, dass durch die Aufbringung der Pufferschicht quasi kein Volumenzuwachs am Vorkammer-Modul entsteht, die Pufferschicht hat alleine den Zweck, eine bessere Bindung zwischen den Schichten zu erzielen.

Idealerweise umfasst das Vorkammer-Modul ein erstes Bauteil, das neben dem die Vorkammer bildenden Hohlraum und den Überströmkanälen auch den Verbindungskanal aufweist. Wenigstens ein weiteres Bauteil des Vorkammer-Moduls umfasst demgegenüber den Großteil desjenigen Anteils, welches die Ausnehmungen für die Aufnahme des Vorkammer-Injektors sowie der Zündvorrichtung umschließt.

Wie bereits im einleitenden Teil ausgeführt wurde, ist es wünschenswert, einen Einheits-Motorblock bereitzuhalten, der wahlweise mit dem passenden Vorkammer-Modul bestückbar ist, um jeweils darauf basierend den Aufbau eines Verbrennungsmotors zu ermöglichen, der dann nach einem der vorgestellten Konzepte I, II, Illa sowie IIIb aufgebaut wird und dementsprechend zur Anwendung kommt. Idealerweise soll auch für jene unterschiedlichen Konzepte ein einheitlicher Zylinderkopf verfügbar sein, was erfindungsgemäß durch eine vorteilhafte Konstruktion des Vorkammer-Moduls mit intelligenter Anordnung der Komponenten Vorkammerinjektor und Zündvorrichtung erreicht werden kann. Insbesondere ist für den Betrieb gemäß der Konzepte II sowie IIIa, IIIb ein vergleichsweise großvolumiger Kraftstoffinjektor für die Kraftstoffzuführung in die Vorkammer notwendig, um eine Direkteinspritzung in den Hauptbrennraum über die Vorkammer für einen möglichst großen Betriebsbereich des Verbrennungsmotors bis hin zum Motorbetriebspunkt des maximalen Kraftstoffverbrauchs überhaupt zu ermöglichen. Dies macht jedoch eine sich gegenüber dem Stand der Technik bekannte unterscheidende Anordnung und Ausrichtung der beiden Komponenten Vorkammer-Injektor und Zündvorrichtung für die Vorkammer notwendig.

Vor diesem Hintergrund wird vorgeschlagen, das Vorkammer-Modul mit Aufnahmebohrungen für die Aufnahme der Zündvorrichtung und den Vorkammer-Injektor zu fertigen, deren Längsachsen nicht parallel zueinander verlaufen, sondern deren gedachte Fortführungen der Längsachsen sich stattdessen schneiden. Mit anderen Worten, die Ausrichtung der einsetzbaren Zündvorrichtung sowie des Vorkammerinjektors verlaufen schräg zueinander, sodass der verfügbare Bauraum oberhalb des Hauptbrennraums möglichst ideal ausgenutzt werden kann. Dies gestattet eine Verwendung großvolumiger Vorkammer-Injektoren resp. eine Verwendung solcher Vorkammer-Injektoren, die einen vergleichsweise großen Durchmesser aufweisen. Nachfolgend wird der Einfachheit halber nur von Längsachsen gesprochen, es versteht sich jedoch von selbst, dass die folgenden Ausführungen auch die gedachten Fortführungen der Längsachsen meinen.

Bevorzugt ist in diesem Zusammenhang, wenn die Längsachse einer der Komponenten Vorkammer-Injektor bzw. Zündvorrichtung im Einbauzustand parallel, bevorzugt deckungsgleich zu einer gedachten Längsachse des Hauptbrennraums verläuft. Besonders bevorzugt ist es, wenn das Vorkammer-Modul mit einer Längsachse des die Vorkammer bildenden Hohlraums gefertigt ist, die parallel, insbesondere deckungsgleich mit der Längsachse der Aufnahmebohrung zur Aufnahme der Zündvorrichtung verläuft. Insbesondere wird vorgeschlagen, dass das Vorkammer-Modul mit einer Aufnahmebohrung für die Zündvorrichtung hergestellt wird, deren Längsachse schräg zu einer Hauptachse bzw. Längsachse des Hauptbrennraums verläuft. Demzufolge ist auch eine Längsachse des Hohlraums schräg zur Längsachse des Hauptbrennraums ausgerichtet.

Besonders bevorzugt ist es in diesem Zusammenhang, wenn der Verbrennungsmotor mit einem Einheitszylinderkopf gefertigt wird, der wahlweise in Abhängigkeit des gewünschten Kraftstoffzuführungskonzepts, das heißt einem Konzept gemäß I, II, III, IIIa, IIIb, mit einem jeweils spezifischen Vorkammer-Modul bestückbar ist. Demzufolge kann nur durch die Anpassung des Vorkammer-Moduls, insbesondere einer Anpassung der Aufnahmebohrung für den Vorkammer-Injektor und den Einbau des für das jeweilige Konzept benötigten Vorkammer-Injektor sowie der geometrischen Ausgestaltung des Vorkammervolumens, ein geeigneter Verbrennungsmotor für das gewünschte Kraftstoffzuführungskonzept aufgebaut werden. Der Rumpfmotor umfassend den Motorblock, den Kurbeltrieb, den Ventiltrieb etc. kann im Idealfall unverändert beibehalten werden. Weitere Änderungen an der Peripherie müssen nicht zwingenderweise vorliegen, aber können zur Erzielung eines Mehrwerts sinnvoll sein, etwa eine Änderung an der Luftstrecke oder am Kraftstoffpfad, um das Bereitstellen der entsprechenden Betriebsstoffe unter einem höheren Druckniveau zu ermöglichen.

Aufgrund der auftretenden Temperaturen im Bereich der Vorkammer ist eine Kühlung des Vorkammer-Moduls notwendig oder zumindest vorteilhaft. Der Verlauf etwaiger, im Zylinderkopf verlaufender Kühlkanäle wird vorzugsweise an die Struktur des Vorkammer-Moduls angepasst, wodurch diese das eingesetzte Modul umströmen. Idealerweise wird die Wand des Vorkammer-Moduls unmittelbar vom Kühlmedium umströmt. Vorteilhaft ist es, wenn das Vorkammer-Modul mit einer solchen Außenwandung gedruckt wird, die mit ein oder mehreren Rippen zum Zweck der Oberflächenvergrößerung und Erhöhung der erzielbaren Kühlwirkung versehen ist. Durch das Vorhandensein einer entsprechend gezielt ausgewählten spezifischen Wandungskontur lassen derartige Verwirbelungen des vorbeiströmenden Kühlmediums erzielen, in dem die Kühlwirkung des die Vorkammer umschließenden Wandbereichs weiter verstärkt werden kann. Bei einer mehrteiligen Fertigung des Vorkammer-Moduls werden entsprechende dahingehend optimiert ausgestaltete Rippen vorzugsweise auf der Außenwand des ersten Bauteils während dessen Herstellung durch ein additives Verfahren ausgeführt, wofür ein additives Herstellungsverfahren insbesondere ein 3D-Druck zur Anwendung kommt, erstellt.

Ferner kann es sinnvoll sein, wenn das Vorkammer-Modul mit einem die Vorkammer bildenden Hohlraum gedruckt wird, der keine rotationssymmetrische Geometrie aufweist, sondern stattdessen der Hohlraum das Vorkammer-Modul mit ein oder mehreren volumenvergrößernden partiellen Aufweitungen erstellt wird. Eine derart gestaltete Aufweitung kann raupenförmig ausgeführt sein. Entsprechende partielle Aufweitungen sind bevorzugt im bzw. um den Mündungsbereich des Vorkammer-Injektors bzw. des betreffenden Verbindungskanals vorhanden. Mit Hilfe der partiellen Aufweitung kann eine bessere Vermischung des eintretenden Kraftstoffes mit der sich bereits im Hohlraum befindlichen Luft erzielt werden, was jeweils innerhalb derjenigen Betriebsphasen zur vorteilhaften Geltung kommt, in denen diejenige Kraftstoffbeladung der Vorkammer erfolgt, die zur späteren Ausbildung der Zündfackeln Verwendung findet. Die partielle Aufweitung wird vorzugsweise derart ausgeführt, dass genau eine gedankliche derart positionierte Ebene existiert, über die der die Vorkammer bildende Hohlraum gedanklich in zwei Bereiche unterteilt werden kann, welche die gleiche Geometrie aufweisen.

Neben dem erfindungsgemäßen Verfahren wird zusätzlich ein Verbrennungsmotor, insbesondere ein Gasmotor, besonders bevorzugt ein Wasserstoffmotor, vorgeschlagen, der nach dem erfindungsgemäßen Verfahren hergestellt ist und dessen mittels des Vorkammer-Moduls realisierte Vorkammer als reiner Zündverstärker dient. Der Verbrennungsmotor kann zudem zusätzlich eine Saugrohreinspritzung aufweisen, die in einer der möglichen Ausführungsformen der einzige Kraftstoffzuführungspfad für den Hauptbrennraum ist, derweil die Vorkammer nur als Zündverstärker fungiert. Bevorzugt ist es, wenn der betreffende Kraftstoffaustritt aus dem Injektor für die Saugrohreinspritzung in demjenigen Abschnitt des Saugkanals mündet, der bereits im Zylinderkopf eingearbeitet ist. Die Befestigung des Injektors für die Saugrohreinspritzung kann dann mittelbar oder bevorzugt unmittelbar am Zylinderkopf erfolgen.

Darüber hinaus wird gemäß der Erfindung ein Verbrennungsmotor, insbesondere ein Gasmotor, besonders bevorzugt ein Wasserstoffmotor, vorgeschlagen, der ebenfalls nach dem erfindungsgemäßen Verfahren hergestellt ist, dessen Vorkammer-Injektor jedoch zur Kraftstoffzuführung in einen Hauptbrennraum über die Vorkammer ausgelegt ist. Insbesondere ist der Kraftstoffinjektor derart ausgelegt, dass ohne Nutzung eines dazu parallelen Kraftstoffpfades die zuführbare Kraftstoffmenge für einen bestimmten Teillastbetrieb abgedeckt werden kann bis dahingehend, dass sogar der Motorbetriebspunkt des maximalen Kraftstoffverbrauchs ausschließlich über den sich über die Vorkammer erstreckenden Kraftstoffpfad ausreichend ist. Der Verbrennungsmotor kann zusätzlich eine Saugrohreinspritzung aufweisen, die als einer der möglichen Kraftstoffzuführungspfade in den Hauptbrennraum dient. Bevorzugt ist es, wenn die betreffende Kraftstoffeinmündung, d.h. der Injektor für die Saugrohreinspritzung in demjenigen Abschnitt des Saugkanals mündet, der bereits im Zylinderkopf eingearbeitet ist. Die Befestigung des Injektors für die Saugrohreinspritzung kann dann mittelbar oder bevorzugt unmittelbar am Zylinderkopf erfolgen.

Weitere Vorteile und Eigenschaften der Erfindung sollen nachfolgend anhand eines in den Figuren dargestellten Ausführungsbeispiels näher erläutert werden. Es zeigen:
- Figur 1:: einen Querschnitt durch den Zylinderkopf einer ersten Ausführung des erfindungsgemäßen Verbrennungsmotors mit eingesetztem VorkammerModul,
- Figur 2:: eine Detaildarstellung des Zylinderkopfes gemäß Figur 1 im Bereich des die Vorkammer bildenden Hohlraums,
- Figuren: 3a, 3b: perspektivische Darstellungen des unbestückten Zylinderkopfes gemäß der ersten Ausführung,
- Figur 4:: eine Draufsicht auf den unbestückten Zylinderkopf gemäß der ersten Ausführung,
- Figur 5:: perspektivische Darstellung des vollständig bestückten Zylinderkopfes gemäß der ersten Ausführung,
- Figur 6:: eine Explosionsdarstellung des Zylinderkopfes nebst Vorkammer-Modul gemäß der ersten Ausführung,
- Figuren 7a, 7b:: unterschiedliche Varianten des Vorkammer-Moduls,
- Figur 7c:: Schnittdarstellung des Vorkammer-Moduls,
- Figuren 8a - 8c:: Detaildarstellungen des Vorkammer-Moduls,
- Figur 9:: eine schematische Ansicht auf die Flammplatte des Zylinderkopfes aus einer Perspektive vom Brennraum gesehen,
- Figuren 10a, 10b:: eine mehrteilige Ausführung des Vorkammer-Moduls,
- Figuren 11a, 11b:: Schnittdarstellung durch den erfindungsgemäßen Zylinderkopf der Verbrennungsmaschine gemäß der ersten Ausführung mit zwei unterschiedlichen Varianten eines montierten Zylinderkopfdeckels und
- Figur 12:: eine weitere alternative Ausführung des Vorkammer-Moduls.

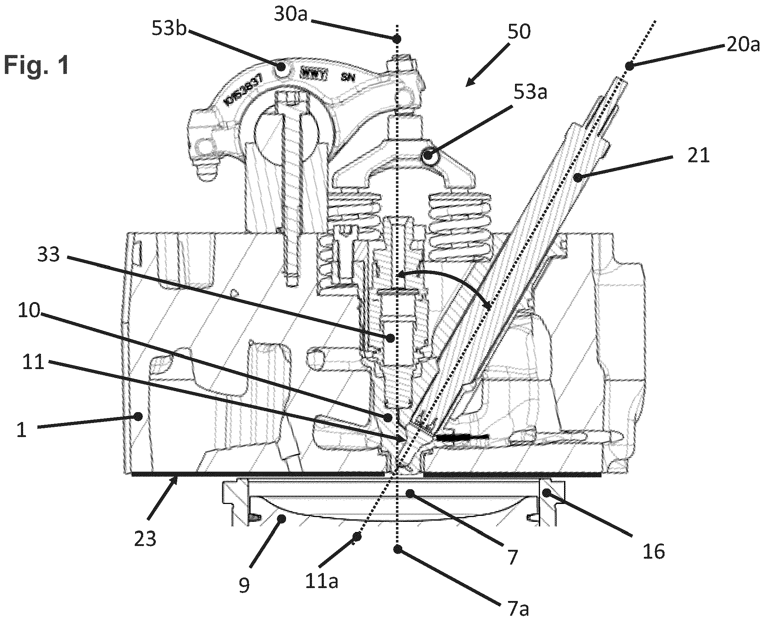

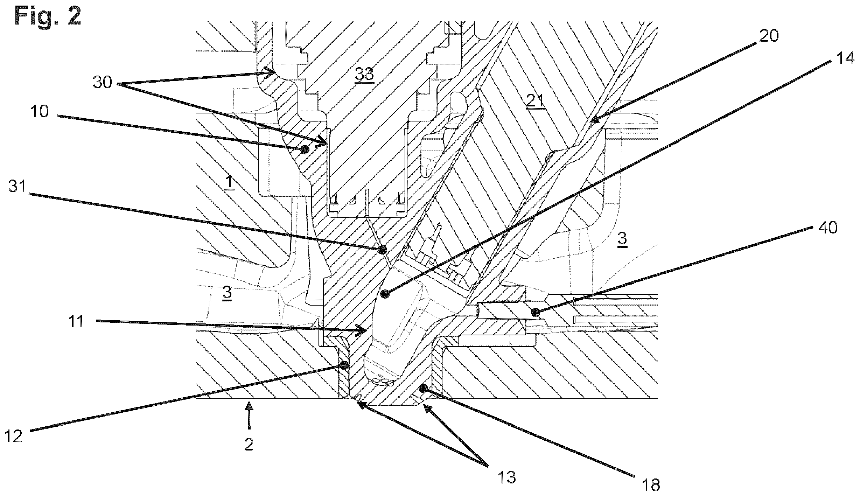

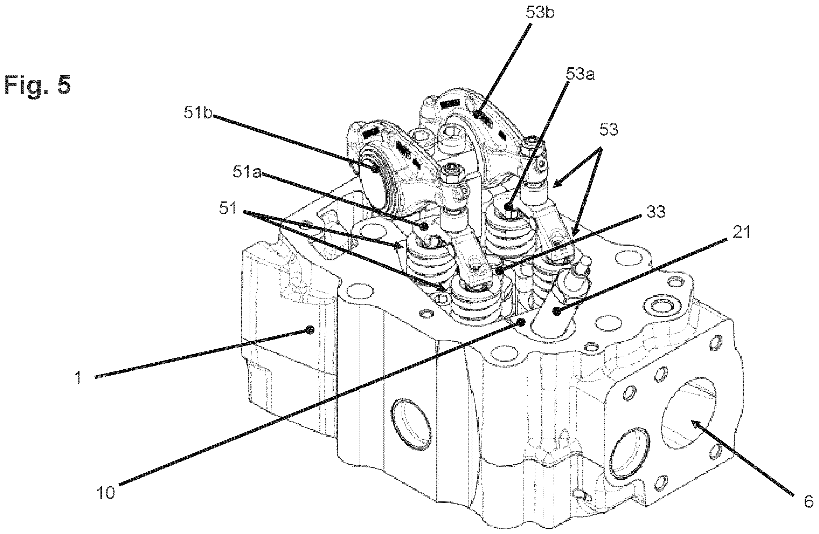

Figur 1 zeigt einen Querschnitt durch den Zylinderkopf 1 eines erfindungsgemäßen Verbrennungsmotors, der vorzugsweise als Gasmotor, insbesondere als Wasserstoffmotor ausgestaltet ist und mit Hilfe eines Vorkammer-Moduls 10 aufgebaut wird, das mittels des erfindungsgemäßen Verfahrens herstellbar ist. Die Figuren 2-5 zeigen alternative Perspektiven bzw. Ausschnitte dieser Ausführung. Das Bezugszeichen 2 kennzeichnet den Bereich der Flammplatte 2 des Zylinderkopfes 1. Auf der Oberseite des Zylinderkopfes 1 sind oberhalb der jeweiligen Hauptbrennräume die Ventiltriebe 50 für die Ein- und Auslassventile verbaut. Pro Brennraum existiert bei dem hier gezeigten Verbrennungsmotor ein Paar von Ein- und Auslassventilen 53, 51, die jeweils über eine gemeinsame Ventilbrücke 51a, 53a und den gemeinsamen Kipphebel 51b, 53b betätigbar sind (siehe Figur 5. 6). Unterhalb des Ventiltriebs 50 ist das Vorkammer-Modul 10 in eine dafür vorgesehene Ausnehmung 4 des Zylinderkopfes 1 eingesetzt.

Das Vorkammer-Modul 10 dient als Träger für eine Zündkerze 21 sowie einen Vorkammer-Injektor 33. Die Zündkerze 21 ist dazu in eine entsprechende Aufnahmebohrung 20 des Vorkammer-Moduls 10 eingesetzt, die gestufte Aufnahmebohrung 30 dient zum Einsetzen des Vorkammer-Injektors 33. Die Längsachse 30a der Aufnahmebohrung 30 bzw. des eingesetzten Vorkammer-Injektors 33 verläuft fluchtend bzw. deckungsgleich mit der Längs- bzw. Rotationsachse des darunterliegenden Hauptbrennraums 7. Den Kolben 9 und die Laufbuchse 16 betreffend zeigt der gewählte Längsschnitt lediglich den Nahbereich der Brennraummulde auf. Mit dem Bezugszeichen 23 ist noch die Zylinderkopfdichtung angedeutet. Die Längsachse 20a der Aufnahmebohrung 20 bzw. der eingesetzten Zündkerze 21 verläuft schräg zur Achse 30a bzw. zur Brennraumachse 7a. Der das Brennraumvolumen der Vorkammer bildende Hohlraum ist mit dem Bezugszeichen 11 gekennzeichnet. Erkennbar ist, dass die Längsachse 11a des Hohlraums 11, sprich der Vorkammer auf der Längsachse 20a der Zündvorrichtung liegt und damit ebenfalls schräg zur Längsachse 7a des Hauptbrennraums 7 sowie der Längsachse 30a des Vorkammer-Injektors 33 orientiert ist.

Durch diese Maßnahme kann der verfügbare Bauraum unterhalb des Ventiltriebs 50 nahezu vollständig für die Installation eines Vorkammer-Injektors 33 ausgenutzt werden, wodurch dieser deutlich größer dimensionierbar ist und die mittels des Vorkammer-Injektors 33 pro Zyklus - resp. innerhalb eines sich darin zur Verfügung stehenden Zeitkorridors - zuführbare maximale Kraftstoffmenge erheblich ansteigt. Die Vorgeschlagene Bauart macht daher ein Motorbetriebskonzept gemäß den eingangs erwähnten Varianten I, II, IIIa und IIIb möglich.

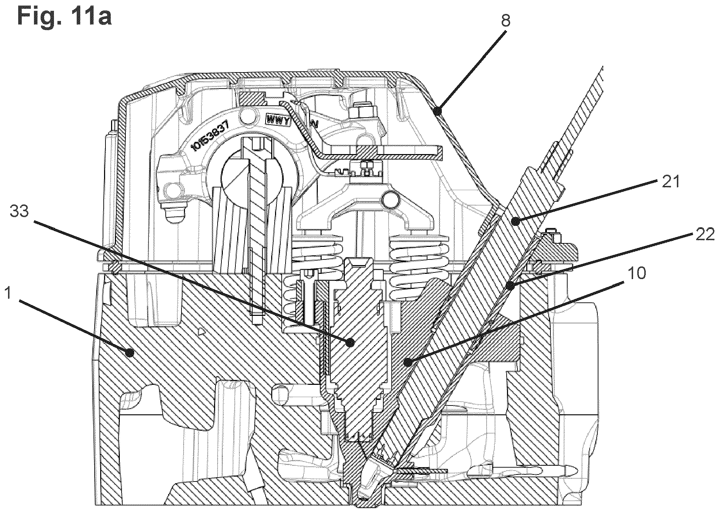

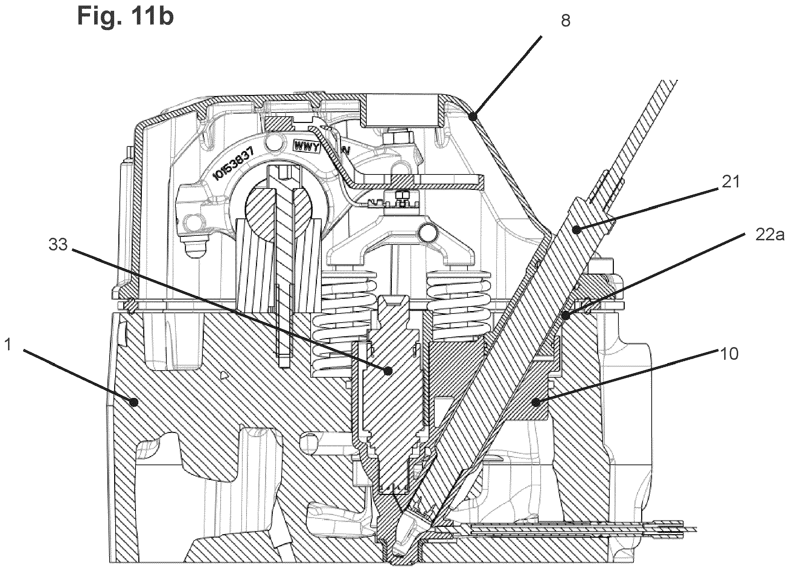

Ein weiterer Vorteil dieser Bauart besteht darin, dass das Ende der Zündkerze 21 durch die schräge Lage nicht im Bereich des Ventiltriebs 50 aus dem Zylinderkopf austritt, sondern dazu in Richtung des Lufteinlasses versetzt. Damit ist das freiliegende Ende der Zündkerze 21 frei zugänglich. Idealerweise ist der Neigungswinkel der Längsachse 20a so gewählt, dass die Zündkerze 21 nicht unterhalb des aufgesetzten Zylinderkopfdeckels 8 aus dem Zylinderkopf 1 heraussteht, sondern ebenfalls seitlich in Richtung des Lufteinlasses versetzt herausragt (siehe Figuren 11a, 11b), so dass die Zündkerze 21 ohne Demontage des Zylinderkopfdeckels 8 oder sonstiger Komponenten des Zylinderkopfes 1 zugänglich und komfortabel ausgetauscht werden kann. Zur Stabilisierung und Fixierung der Zündkerze 21 ist hierfür eine die Aufnahmebohrung 20 verlängernde Führungshülse 22 in dieselbe eingesetzt, die einerseits am Vorkammer-Modul 10 fixiert und andererseits am Rand des Zylinderkopfdeckels 8 befestigt ist (siehe Figur 11a). Alternativ könnte die Führungshülse 22a auch vollständig durch den Zylinderkopfdeckel 8 ausgebildet sein (Figur 11b), wobei in diesem Fall eine Fertigung des Zylinderkopfdeckels 8 per 3D-Druck oder eines anderen additiven Herstellungsverfahrens sinnvoll ist.

Eine vergrößerte Detaildarstellung des Vorkammer-Moduls 10, insbesondere des Bereichs um den Hohlraum 11 ist in der Figur 2 gezeigt. Diese hier vergrößert dargestellte Ausführung des Vorkammer-Moduls 10 zeigt einen die Vorkammer ausbildenden Hohlraum 11, der nicht rotationssymmetrisch ist, sondern stattdessen eine über seinen Umfang variierende Geometrie aufweist. Insbesondere ist hier im Bereich unterhalb der Kraftstoffzuführungsöffnung des Verbindungskanals 31 eine partielle, den Durchmesser vergrößernde Aufweitung 14 des Hohlraums 11 vorgesehen, wodurch als Folge davon im Allgemeinen eine Aufweitung der entsprechenden lokalen Aussenabmasse einhergeht. Durch diese Aufweitung können gezielt Verwirbelung des eintretenden Kraftstoffes erzeugt und somit eine bessere Vermischung mit dem innerhalb der Vorkammer befindlichen Luftgemisch erzielt werden. Der Vorkammer-Injektor 33 ist über den im Modul integrierten Verbindungskanal 31 zur Kraftstoffzuführung in die Vorkammer fluidisch mit dem Hohlraum 11 verbunden. In der hier gezeigten Ausführungsform zeigt der Verbindungungskanal 31 einen geradlinigen Verlauf, wobei dieser im einfachsten Fall zylindrisch ausgestaltet sein kann. Bevorzugt ist jedoch eine zumindest abschnittsweise konische Kanalgestaltung, wobei sich vorzugsweise der Kanaldurchmesser in Richtung des Hohlraums 11 reduziert. Durch diese Maßnahme kann ein unerwünschtes Backfiring von der Vorkammer in Richtung des Vorkammer-Injektors 33 reduziert oder vermieden werden.

Die untere Kuppe 18 des Vorkammer-Moduls 10 ragt aus der Flammplatte 2 des Zylinderkopfes 1 hinaus und endet im Hauptbrennraum 7. Die Kuppe 18 umfasst eine Vielzahl von Überströmkanälen 13, die die notwendige fluidische Verbindung zwischen der Vorkammer und dem Hauptbrennraum 7 bilden. Diese Überströmkanäle 13 ermöglichen sowohl den Kraftstoffdurchfluss von der Vorkammer in den Hauptbrennraum 7 gleichsam einer Direkteinspritzung und ein Überschießen der Zündfackeln von der Vorkammer in den Hauptbrennraum 7. Auch dienen diese Überströmkanäle 13 als Luftzuführung in die Vorkammer. Um den äußeren Umfang der Kuppe 18 des Vorkammer-Moduls 10 verläuft ein Flanschring 12, um den Hauptbrennraum 7 im Eintrittsbereich der Kappe 18 des Vorkammer-Moduls 10 abzudichten.

Ferner sind der Querschnittsdarstellung Teilabschnitte der im Zylinderkopf 1 verlaufenden Kühlkanäle 3 zu entnehmen. Der Verlauf der Kühlkanäle 3 wurde dahingehend angepasst, so dass das eingesetzte Vorkammer-Modul 10 insbesondere in demjenigen Wandbereich des Hohlraums 11 unmittelbar durch das zirkulierende Kühlmedium unmittelbar umströmt wird.

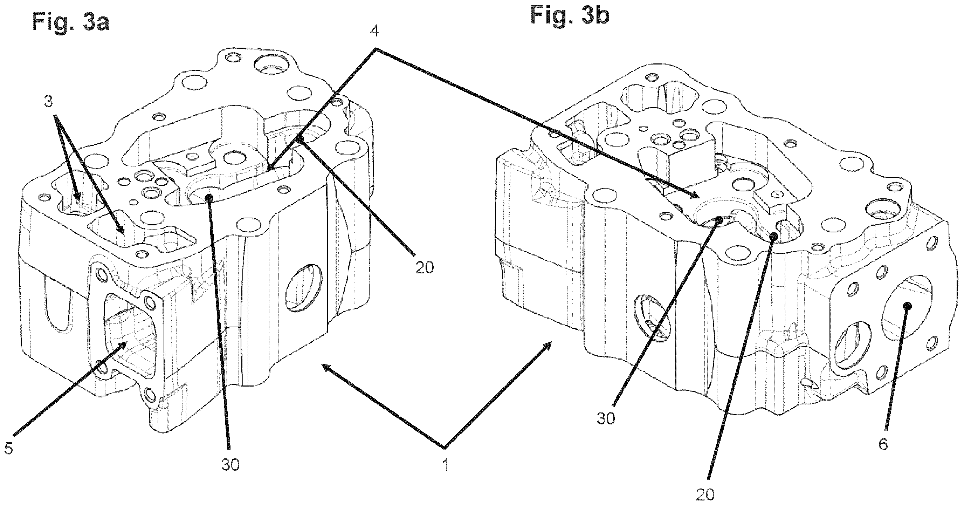

Die Figuren 3a, 3b zeigen perspektivische Ansichten des unbestückten Zylinderkopfes 1, mit der entsprechenden Ausnehmung 4 für den Einsatz des Vorkammer-Moduls 10. Die Ausnehmung 4 dient ebenfalls zur Installation der Ventilstößel für die Einlass- und Auslassventile 53, 51. Erkennbar ist in dieser Darstellung, dass die Aufnahmebohrung 20 für die Zündkerze 21 im Nahbereich des Lufteinlass 6 schräg in den Zylinderkopf 1 hineinragt. Auf der zum Lufteinlass 6 gegenüberliegenden Seite des Zylinderkopfes 1 befindet sich die Öffnung des Abgasauslasses 5.

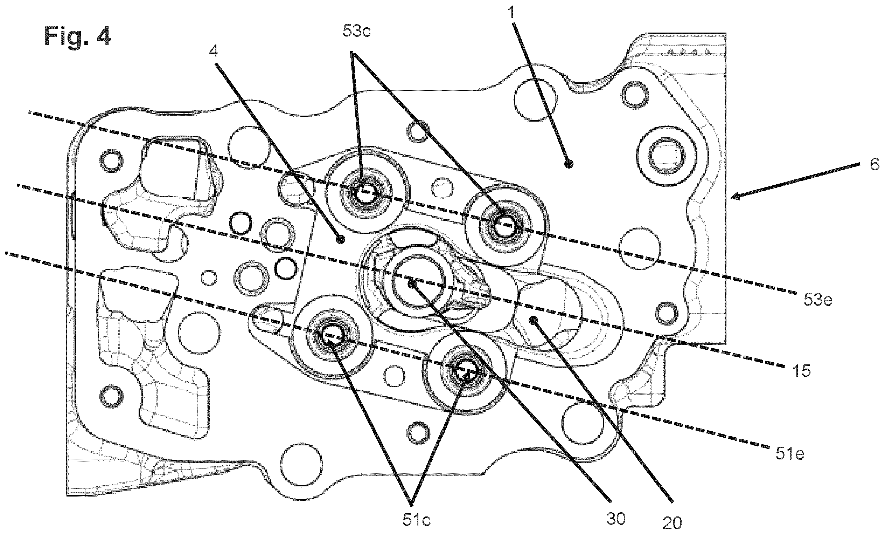

Die Figur 4 zeigt eine Draufsicht auf den Zylinderkopf 1 und soll die Lage des Vorkammer-Moduls 10 relativ zum Ventiltrieb 50 verdeutlichen. Ersichtlich sind die Ausnehmung 4 mit den Bohrungen 20, 30 sowie die Bohrungen 53c für die Aufnahme der Ventilstößel der Einlassventile 53 und die entsprechenden Bohrungen 51c die Auslassventile 51 betreffend. Die gestrichelte Linie 53e entspricht der durch die jeweils gedachte Zentralachse der beiden Einlassventile 53 resp. der entsprechenden Ventilstössel 55a aufgespannten Ebene, die gestrichelte Ebene 51e stellt die durch die jeweils gedachte Zentralachse der beiden Auslassventile 51 resp. der entsprechenden Ventilstössel 55b aufgespannte Ebene dar. Die aufgespannte Ebene 15 entspricht der durch die Längsachsen 30a, 20a des Vorkammer-Injektors 33 und der Zündkerze 21 aufgespannten Ebene. Letztgenannte Ebene 15 liegt ersichtlich parallel zwischen den beiden Ebenen 51e, 53e, insbesondere mittig zwischen beiden Ebenen 51e, 53e. Figur 5 zeigt den vollständig bestückten Zylinderkopf mit dem Ventiltrieb 50 sowie dem eingesetzten Vorkammer-Modul 10.

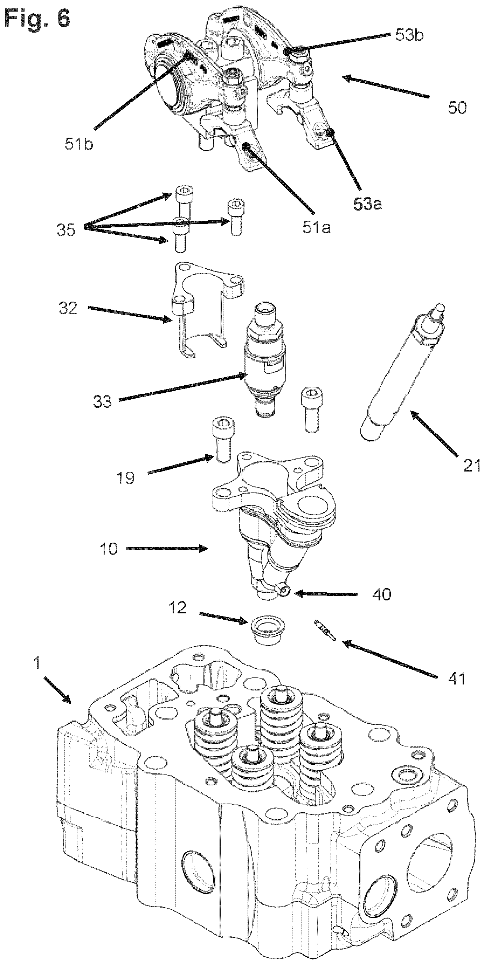

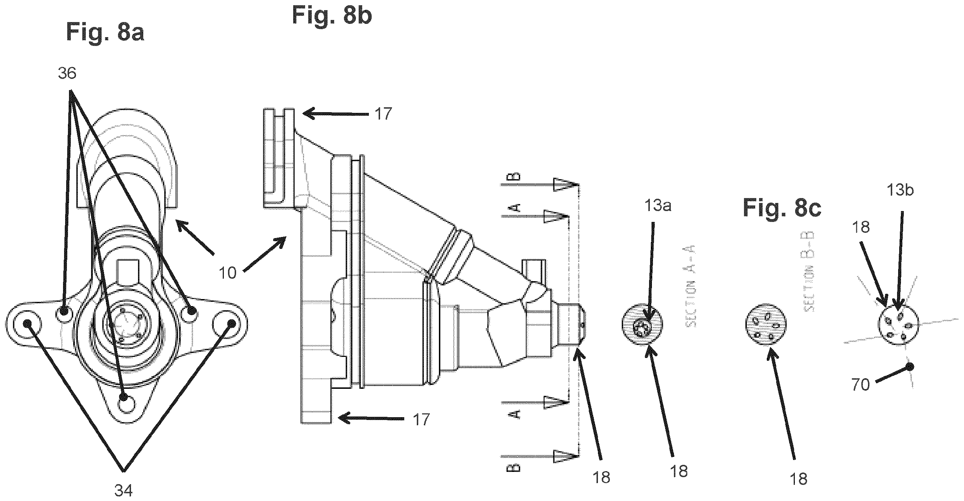

Figur 6 ist eine Explosionsdarstellung zahlreicher hier im Fokus stehender Bauteile im Nahbereich des Zylinderkopfes 1. Die Fixierung des Vorkammer-Moduls 10 am Zylinderkopf 1 erfolgt mittels der beiden Schrauben 19, die durch die Bohrungen 34 (Fig. 8a) des oberen Kragens des Vorkammer-Moduls 10 durchgeführt werden. Durch eine in die Bohrung 30 für die Aufnahme des Vorkammer-Injektors 33 ebenfalls einführbare Haltepratze 32 kann der Vorkammer-Injektor 33 am Vorkammer-Modul 10 fixiert werden. Die Haltepratze 32 wird mittels der drei Schrauben 35 mit dem Vorkammer-Modul 10 fixiert, wobei dazu am Kragen ebenfalls entsprechende Bohrungen 36 vorgesehen sind (Fig. 8a). Mit dem Bezugszeichen 40 ist hier ein Sensorzugang gezeigt, um einen Sensor 41 im Bereich des Hohlraums 11 innerhalb des Vorkammer-Moduls 10 installieren zu können. Der Sensor 41 kann bspw. ein Sensor zur Erfassung der Druckwerte und/oder Temperaturwerte und/oder des LambdaWertes innerhalb der Vorkammer sein.

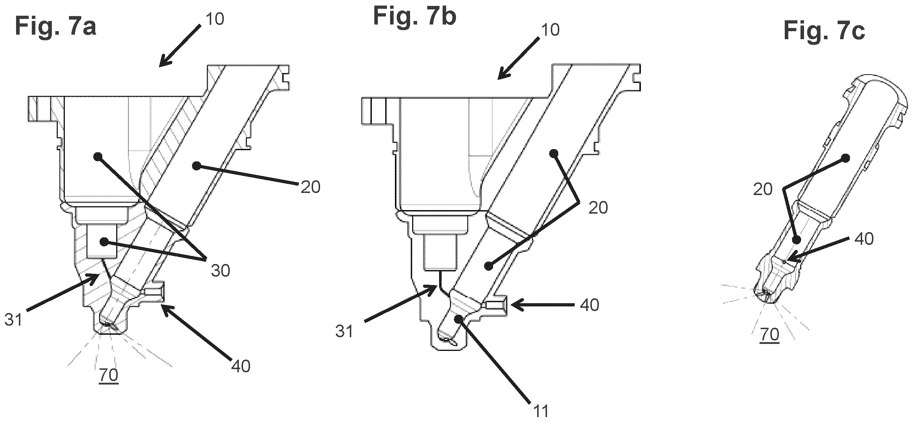

Die Figuren 7a, 7b zeigen unterschiedliche Ausführungen des Vorkammer-Moduls 10, die sich hinsichtlich der Kanalführung des Verbindungskanals 31 voneinander unterscheiden. In der linken Darstellung der Figur 7a ist der Verbindungskanal 31 geradlinig ausgestaltet. Bei der Ausführung der Figur 7b hat der Verbindungskanal 31 stattdessen einen abgewinkelten bzw. einen gekrümmten Kanalverlauf, wobei die Ausgestaltung derart ausgeführt ist, dass durch einen entsprechend gewählten ebenen Schnitt der gesamte Kanalverlauf freigelegt ist. Alternativ zu jenen gezeigten Ausführungsbeispielen kann der Verbindungskanal einen helixartigen Verlauf aufweisen. Durch die helix- bzw. wendelförmige Kanalführung wird während des Betriebs zusätzlich eine Verwirbelung des in den die Vorkammer bildenden Hohlraums 11 eingebrachten Kraftstoffes erzwungen, wodurch die dortige Vermischung mit der darin vorhandenen Luftmenge begünstigt werden kann.

Die Figur 7c zeigt eine Schnittdarstellung des Vorkammer-Moduls 10 entlang der Längsachse 20a, wobei das Vorkammer-Modul 10 bezugnehmend zu derjenigen Orientierung, die in den Figuren 7a, 7b vorliegt um 90° im Uhrzeigersinn gedreht wurde.

Die Strichdarstellungen 70 deuten das Spraybild des in den Hauptbrennraum 7 über die Vorkammer zugeführten Kraftstoffes an. Innerhalb des Hauptbrennraums 7 soll das Spraybild 70 optimalerweise symmetrisch sein, was aufgrund der zum Hauptbrennraum 7 geneigten Ausrichtung des die Vorkammer bildenden Hohlraums 11 jeweils eine individuell darauf abgestimmte Ausrichtung jedes der Überströmkanäle 13 verlangt.

Diese besondere Ausrichtung der Überströmkanäle 13 ist in den Schnittdarstellungen der Figur 8c gezeigt. Die linke Darstellung zeigt hier einen Profilquerschnitt durch die Kuppe 18 im unteren Bereich des Hohlraums 11. Zu sehen sind daher die eng zusammenliegenden Kanalöffnungen 13a innerhalb des Hohlraums 11. Die mittlere Darstellung zeigt einen Profilschnitt nahe der Unterkante der Kuppe 18 und die rechte Darstellung eine Ansicht auf die Unterseite der Kuppe 18, die sich bezugnehmend auf einen betriebsbereiten Einbau an einer Brennraum-Einheit oder eines betriebsbereiten Verbrennungsmotors innerhalb des Hauptbrennraums 7 befindet. Ersichtlich ist hierbei, dass die Ausgangsöffnungen 13b der Überströmkanäle 13 auf einer Ringgruppe der Kuppe 18 angeordnet sind. Dies ist dadurch möglich, dass die Länge der einzelnen Überströmungskanäle 13 unterschiedlich gewählt ist, wodurch die schräge Lage des die Vorkammer bildenden Hohlraums 11 ausgeglichen wird, um das zuvor erwähnte symmetrische Spraybild innerhalb des Hauptbrennraums 7 erzielen zu können.

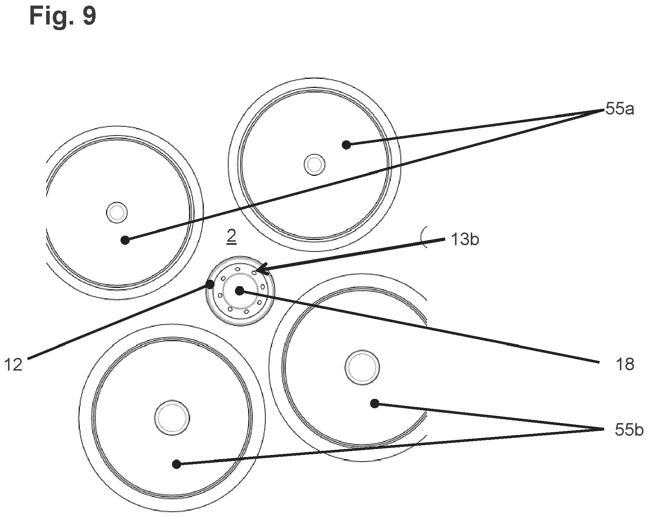

Die Figur 9 zeigt eine Ansicht auf die Unterseite der Kuppe 18 aus einer Perspektive innerhalb des Hauptbrennraums 7. Zu sehen sind die die Unterseiten der Ventilstößel 55a, 55b der Ein- und Auslassventile 51, 53. Aus dieser Perspektive ist die symmetrische und gleichverteilte Anordnung der Öffnungen 13b der Überströmkanäle 13 auf einer gemeinsamen Ringgruppe erkennbar, was maßgeblich für ein symmetrisches Spraybild 70 ist.

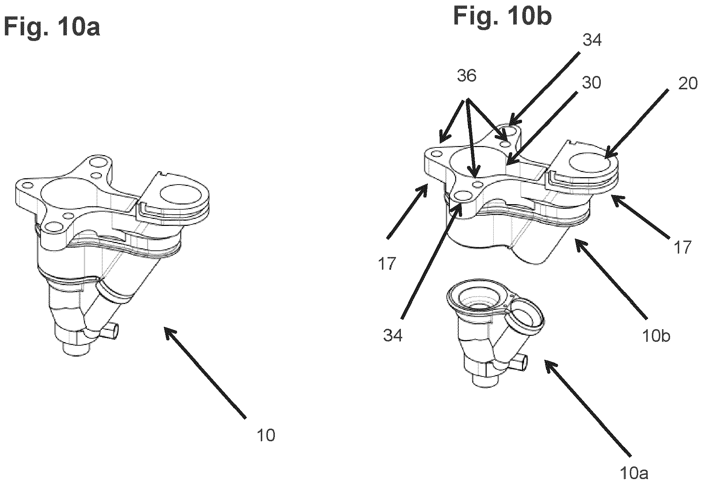

Die Figuren 10a, 10b zeigen explizit eine mehrteilige Ausführung des Vorkammer-Moduls 10. Das Vorkammer-Modul 10 ist in diesem Ausführungsbeispiel zumindest zweiteilig ausgestaltet und besteht aus einem ersten Bauteil 10a, in diesem der die Vorkammer bildende Hohlraum 11, der Verbindungskanal 31 sowie die Überströmkanäle 13 enthalten sind. Das weitere Bauteil 10b umfasst lediglich einen volumenmäßigen Großteil der Ausnehmungen 20, 30 für die Aufnahme der Zündkerze 21 und des Vorkammer-Injektors 33, die Anlageflächen 17 zum Anschlag an den Zylinderkopf 1 sowie die Bohrungen 34, 36. Da insbesondere für das erste Bauteil 10a deutlich höhere Anforderungen an die Maßvorgaben und die Oberflächengüte bestehen, wird das erste Bauteil 10a erfindungsgemäß per 3D-Druck oder mittels eines anderen additiven Verfahrens erzeugt, wohingegen für die Fertigung des weiteren Bauteils 10b vorzugsweise ein kostengünstigeres Verfahren zur Anwendung kommt. Denkbar ist es selbstverständlich auch, dass das Vorkammer-Modul 10 aus mehr als zwei Einzelteilen besteht und zusammengesetzt wird.

Da insbesondere die Überströmkanäle 13 einem starken Verschleiß im Motorbetrieb unterliegen, kann hier eine Erneuerung zur Funktionswahrung der Vorkammer sinnvoll sein. Die mehrteilige Fertigung macht es bspw. möglich, nur das erste Bauteil 10a zu erneuern, während die übrigen Bestandteile weiterverwendet werden können.

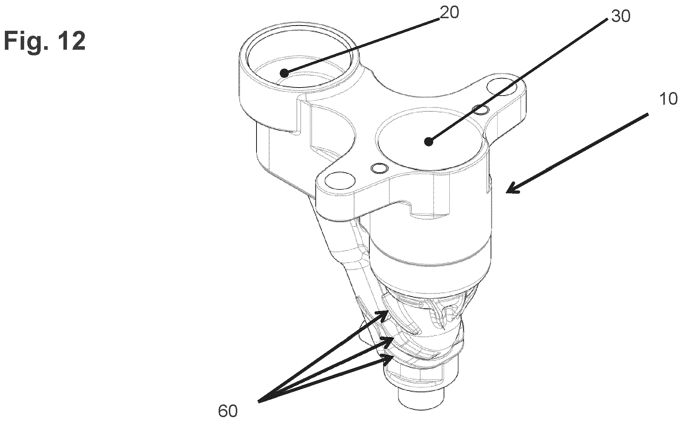

Figur 12 zeigt eine perspektivische Darstellung des Vorkammer-Moduls 10, das im Bereich der durch ein Kühlmedium umströmten äußeren Flächen mit Rippen 60 versehen ist, um hierdurch eine verstärkte Kühlung des die Vorkammer bildenden Hohlraums 11 zu erzielen. Die rippenförmige Ausgestaltung ist vorzugsweise derart gewählt, dass hierdurch nicht nur lediglich eine generelle Oberflächenvergrösserung besteht, sondern darüber hinausgehend derart ausgerichtete Verwirbelungen des umströmenden Kühlmediums erzeugt werden, die das Abtragen von Wärme besonders wirkungsvoll lokal dort begünstigen, wo das Kühlen einen besonders hohen Mehrwert nach sich zieht.

Wie dies bereits wiederholt ausgeführt wurde, bietet die vorstehend ausführlich erläuterte Erfindung den Vorteil, dass ein solcher Verbrennungsmotor gemäß unterschiedlicher Konzepte betrieben werden kann. Gemäß Konzept I kann die mittels des Vorkammer-Moduls 10 integrierte aktive Vorkammer lediglich die Funktion eines Zündverstärkers ausüben. Durch Integration eines passenden Vorkammer-Moduls 10 und dessen artgerechter Bestückung kann der Verbrennungsmotor gemäß des Konzepts II betrieben werden. Dem Hauptbrennraum 7 eines derart ausgestatteten Verbrennungsmotors kann lediglich über die aktive Vorkammer Kraftstoff zugeführt, werden, weil kein weiterer Kraftstoffpfad vorhanden ist. Existiert ein dazu alternativer Kraftstoffpfad, bspw. über eine Saugrohreinspritzung, so kann der Verbrennungsmotor wahlweise eine Kraftstoffzuführung über die aktive Vorkammer oder alternativ über den zweiten Kraftstoffpfad, bspw. über eine Saugrohreinspritzung vorsehen. Eine entsprechende Ausführungsform, bei der bauartbedingt die Haupteinspritzung zur Abdeckung des im Hauptbrennraum 7 erforderlichen Kraftstoffbedarfs nur innerhalb eines begrenzten Anteils des Motorarbeitsbereichs vollständig entlang des sich über die Vorkammer erstreckenden Kraftstoffpfads erfolgen kann, ist möglich (Konzept IIIa). Auch ist eine Ausführungsform möglich, bei der - trotz der Existenz eines alternativen Kraftstoffpfades (bspw. über eine Saugrohreinspritzung) - der sich über die Vorkammer erstreckende Kraftstoffpfad derart ausgelegt ist, dass der Verbrennungsmotor eine Kraftstoffzuführung innerhalb seines gesamten Drehzahl-Drehmoment-Arbeitsbereichs ausnahmslos über die Vorkammer beziehen kann (Konzept IIIb).

Ausführungs-und bestimmungsgemäß ist bei der letztgenannten Variante, d.h. einer Brennraumeinheit gemäß des Konzepts IIIb in entsprechenden Motor-Betriebssituationen vorgesehen, dass die aktive Vorkammer optional die Funktion eines Zündverstärkers ausübt und/oder optional über die aktive Vorkammer Nebeneinspritzungen erfolgen können, derweil die zum Aufbau des eigentlichen Motordrehmoments dienende Kraftstoffzuführung ausschließlich über den Saugrohreingang erfolgt oder ein erster Anteil der entsprechend erforderlichen Kraftstoffmenge über den Saugrohreingang und ein verbleibender Anteil über die Vorkammer erfolgt. Eine entsprechende Betriebsführung gemäß der beiden letztgenannten Varianten kann auch für eine nach dem Konzept IIIa ausgeführte Brennraumeinheit erfolgen, wenn der momentane Motorbetriebspunkt mit einer entsprechend geringen Kraftstoffzuführung abgedeckt ist, die mengenmäßig unter einer alleinigen Nutzung des sich über die Vorkammer erstreckenden Kraftstoffpfads abgedeckt werden kann.

In einer vorteilhaften Ausgestaltung ermöglicht ein erfindungsgemässes Vorkammer-Modul (10) die Verwendung eines baugleichen Zylinderkopfs 1, unabhängig davon, ob der fertiggestellte Verbrennungsmotor dem Konzept I, II, IIIa oder IIIB entsprechen soll.

### Bezugszeichenliste:

| | |
|---|---|
| Zylinderkopf | 1 |
| Flammplatte | 2 |
| Kühlkanal | 3 |
| Aufnahme für Vorkammer-Modul | 4 |
| Luftauslass | 5 |
| Lufteinlass | 6 |
| Hauptbrennraum | 7 |
| Längsachse Hauptbrennraum | 7a |
| Zylinderkopfdeckel | 8 |
| Kolben | 9 |
| Vorkammer-Modul | 10 |
| Erster Bestandteil des Moduls | 10a |
| Zweiter Bestandteil des Moduls | 10b |
| Hohlraum | 11 |
| Längsachse Hohlraum | 11a |
| Flanschring | 12 |
| Überströmkanäle | 13 |
| Öffnungen der Überströmkanäle | 13a |
| Austrittsöffnungen der Überströmkanäle | 13b |
| Aufweitung | 14 |
| Aufgespannte Ebene der Längsachsen der | 15 |
| Aufnahmen 20, 30 | |
| Laufbuchse | 16 |
| Anlagefläche | 17 |
| Vorkammer-Kuppe | 18 |
| Schrauben für Fixierung des Moduls am Zylin- | 19 |
| derkopf | |
| Aufnahme Zündvorrichtung | 20 |
| Längsachse Aufnahme für Zündvorrichtung | 20a |
| Zündkerze | 21 |
| Führungshülse | 22, 22a |
| Zylinderkopfdichtung | 23 |
| Aufnahme für Vorkammer-Injektor | 30 |
| Längsachse der Aufnahme für Vorkammer-In- | 30a |
| jektor | |
| Verbindungskanal | 31 |
| Haltepratze | 32 |
| Vorkammer-Injektor | 33 |
| Bohrungen für Schrauben 19 | 34 |
| Schrauben für Fixierung der Haltepratze am | 35 |
| Modul | |
| Bohrungen für Schrauben 35 | 36 |
| Sensoraufnahme | 40 |
| Sensor | 41 |
| Ventiltriebe | 50 |
| Auslassventile | 51 |
| Ventilbrücke der Auslassventile | 51a |
| Kipphebel der Auslassventile | 51b |
| Bohrungen für Ventilstößel der Auslassventile | 51c |
| Aufgespannte Ebene der Bohrungen 51c | 51e |
| Einlassventile | 53 |
| Ventilbrücke der Einlassventile | 53a |
| Kipphebel der Einlassventile | 53b |
| Bohrungen für Ventilstößel der Einlassventile | 53c |
| Aufgespannte Ebene der Bohrungen 53c | 53e |
| Ventilstößel der Auslassventile | 55a |
| Ventilstößel der Einlassventile | 55b |
| Kühlrippen | 60 |
| Spraybild | 70 |

## Patentansprüche

1. Verfahren zur Herstellung eines Verbrennungsmotors, insbesondere eines Gasmotors, mit Vorkammer und einer in die Vorkammer hineinragenden Zündvorrichtung (21) sowie einem der Vorkammer Kraftstoff zuführenden Vorkammer-Injektor (33), **dadurch gekennzeichnet,**
**dass** ein Vorkammer-Modul (10) mit integralem, die Vorkammer bildenden Hohlraum (11) als zum Zylinderkopf (1) separates Bauteil gefertigt wird, wobei das Vorkammer-Modul (10) neben dem das Vorkammervolumen bildenden Hohlraum (11) wenigstens einen Überströmkanal (13) zur fluidischen Verbindung zwischen Vorkammer und Hauptbrennraum (7) aufweist und das Vorkammer-Modul (10) als Ganzes oder zumindest teilweise mittels eines additiven Verfahrens, insbesondere per 3D-Druck, erzeugt wird.

2. Verfahren nach Anspruch 1, **dadurch gekennzeichnet, dass** das Vorkammer-Modul (10) als Träger zur Aufnahme des Vorkammer-Injektors (33) und/oder einer Zündvorrichtung (21) dient.

3. Verfahren nach Anspruch 2, **dadurch gekennzeichnet, dass** das Vorkammer-Modul (10) vor dem Einbau in den Zylinderkopf (1) mit der Zündvorrichtung (21) und/oder dem Vorkammer-Injektor (33) bestückt wird.

4. Verfahren nach Anspruch 2 oder 3, **dadurch gekennzeichnet, dass** das mit seinen aktiven Komponenten, d.h. dem Vorkammer-Injektor (33) und/oder der Zündvorrichtung (21), bestückte Vorkammer-Modul (10) vor dem Einbau in den Zylinderkopf (1) einem Funktionstest unterzogen wird.

5. Verfahren nach einem der vorstehenden Ansprüche, **dadurch gekennzeichnet, dass** das Vorkammer-Modul (10) mit einem Verbindungskanal (31) versehen wird, um den in das Vorkammer-Modul (10) eingesetzten Vorkammer-Injektor (33) mit dem Hohlraum (11) fluidisch zu verbinden.

6. Verfahren nach Anspruch 5, **dadurch gekennzeichnet, dass** die Innenwand des Verbindungskanals (31) zumindest abschnittsweise, vorzugsweise innerhalb eines zusammenhängenden Längenabschnitts mit einer nicht-zylindrischen Kontur gefertigt wird, vorzugsweise mit einer konischen Kontur, wobei bevorzugt der verbleibende Längenbereich mit einer zylindrischen Kontur erstellt wird.

7. Verfahren nach Anspruch 5 oder 6, **dadurch gekennzeichnet, dass** der Verbindungskanal (31) zumindest abschnittsweise mit einem gekrümmten Verlauf und/oder gewinkelten Verlauf gefertigt wird, wobei sich die Bahnkurve über die sich die Krümmung erstreckt vorzugsweise in einer Ebene befindet, und/oder der Verbindungskanal (31) zumindest abschnittsweise mit einem helixartigen Verlauf in Längsrichtung gefertigt wird.

8. Verfahren nach einem der vorstehenden Ansprüche, **dadurch gekennzeichnet, dass** die Herstellung des Vorkammer-Moduls (10) mittels kombiniertem 3D Druckverfahren erfolgt, wobei vorzugsweise zumindest ein Teilbereich des Vorkammer-Moduls (10) durch wenigstens zwei unterschiedliche 3D-Druckverfahren, die nacheinander ausgeführt werden, erstellt wird und/oder zwei unterschiedliche Teilbereiche des Vorkammer-Moduls (10), die überlappend oder vollständig räumlich getrennt sein können, durch wenigstens zwei unterschiedliche 3D-Druckverfahren gefertigt werden, wobei sich die unterschiedlichen 3D-Druckverfahren in mindestens einem Prozessparameter des 3D-Druckverfahrens voneinander unterschieden, insbesondere hinsichtlich des verwendeten Werkstoffes für das Beschichtungsmaterial und/oder hinsichtlich wenigstens eines Maschinenparameters, der bspw. die Geschwindigkeit des Volumenauftrags steuert.

9. Verfahren nach einem der vorstehenden Ansprüche, **dadurch gekennzeichnet, dass** das Vorkammer-Modul (10) durch ein Hybridverfahren hergestellt wird, wobei vorzugsweise ein identischer Teilbereich des Vorkammer-Moduls (10) mittels des 3D-Druckverfahrens und wenigstens einem anderen Herstellungsverfahren angefertigt wird und/oder ein erster Teilbereich des Vorkammer-Moduls (10) per 3D-Druckverfahren und ein zweiter Teilbereich des Vorkammer-Moduls (10) mittels dem anderen Herstellungsverfahren gefertigt wird, wobei sich der erste und zweite Teilbereich überlappen oder sich räumlich getrennt voneinander befinden.

10. Verfahren nach einem der Ansprüche 8 oder 9 **dadurch gekennzeichnet, dass** nach dem 3D-Drucken zumindest eines Teilbereichs des Vorkammer-Moduls (10) eine Pufferschicht auf den gedruckten Bereich aufgetragen wird, bevor der Teilbereich mit einem abweichenden 3D-Druckverfahren bedruckt wird, und/oder nach dem Herstellen zumindest eines Teilbereichs des Vorkammer-Moduls (10) mittels eines anderen Herstellungsverfahrens, wie bspw. eines substraktiven Verfahrens, eine Pufferschicht auf den gefertigten Teilbereich des Vorkammer-Moduls (10) aufgetragen wird, bevor der Teilbereich im Nachgang mit einem 3D-Druckverfahren bedruckt wird, wobei das Auftragen der Pufferschicht vorzugsweise jeweils mittels 3D-Druck erfolgt.

11. Verfahren nach einem der vorstehenden Ansprüche, **dadurch gekennzeichnet, dass** das Vorkammer-Modul (10) zwei- oder mehrteilig gefertigt wird, wobei ein erstes Bauteil (10a) des Vorkammer-Moduls (10) umfassend den das Vorkammervolumen bildenden Hohlraum (11) und den wenigstens einen Überströmkanal (13) sowie vorzugsweise den Verbindungskanal (31) mittels des additiven Verfahrens, insbesondere per 3D-Druck, hergestellt wird, während ein weiteres Bauteil (10b) des Vorkammer-Moduls (10) mittels einem anderen Verfahren hergestellt wird.

12. Verfahren nach Anspruch 11, **dadurch gekennzeichnet, dass** die ein oder mehreren weiteren Bauteile (10b) des Vorkammer-Moduls (10), die weder den die Vorkammer bildenden Hohlraum (11) noch den Verbindungskanal (31) oder den Überströmkanal (13) umfassen, mittels eines subtraktiven Fertigungsverfahren hergestellt werden.

13. Verfahren nach einem der vorstehenden Ansprüche, **dadurch gekennzeichnet, dass** zunächst ein Grundkörper für das Vorkammer-Modul (10) oder das erste Bauteil (10b) des Vorkammer-Moduls (10) vorgefertigt wird, der im Anschluss mittels additiven Fertigungsverfahren, insbesondere per 3D-Druck fertiggestellt wird, wobei bevorzugt der 3D-Druck direkt auf den Grundkörper des Vorkammer-Moduls (10) oder das erste Bauteil (10b) oder einen bereits bestehenden Bereich des Vorkammer-Moduls aufgebracht wird.

14. Verfahren nach einem der vorstehenden Ansprüche, **dadurch gekennzeichnet, dass** das Vorkammer-Modul (10) mit Aufnahmebohrungen (20, 30) für die Zündvorrichtung (21) und den Vorkammer-Injektor (33) gefertigt wird, deren Längsachsen (20a, 30a) nicht parallel zueinander verlaufen und deren gedachte Achsfortführungen sich schneiden, wobei vorzugsweise die Längsachse des Vorkammer-Injektors (33) oder die Längsachse der Zündvorrichtung (21) im montierten Zustand innerhalb des Zylinderkopfes (1) parallel, bevorzugt deckungsgleich zur Längsachse des Hauptbrennraums (7) verläuft.

15. Verfahren nach einem der vorstehenden Ansprüche, **dadurch gekennzeichnet, dass** das Vorkammer-Modul (10) mit einer Längsachse des die Vorkammer bildenden Hohlraums (11) gefertigt wird, die parallel, insbesondere deckungsgleich mit der Längsachse einer Aufnahmebohrung (20) zur Aufnahme der Zündvorrichtung (21) verläuft.

16. Verfahren nach einem der vorstehenden Ansprüche, **dadurch gekennzeichnet, dass** der Zylinderkopf (1) als ein Einheitszylinderkopf gefertigt wird, der wahlweise in Abhängigkeit des gewünschten Kraftstoff-Zuführungskonzeptes des Verbrennungsmotors mit unterschiedlich ausgestalteten Vorkammer-Modulen (10) bestückbar ist, wobei die Wahl des Vorkammer-Moduls (10) vorzugsweise davon abhängt, ob die Vorkammer als reiner Zündverstärker oder als Kraftstoffzuführungspfad für eine Direkteinspritzung in den Hauptbrennraum (7) genutzt werden soll.

17. Verfahren nach einem der vorstehenden Ansprüche, **dadurch gekennzeichnet, dass** der Zylinderkopf (1) mit einem oder mehreren, ein Kühlmedium führenden Kühlkanälen (3) ausgeformt wird, die sich um eine Außenwand des Vorkammer-Moduls (10) erstrecken, insbesondere im Bereich des Hohlraums (11) des Vorkammer-Moduls (10).

18. Verfahren nach Anspruch 17, **dadurch gekennzeichnet, dass** während der Fertigung mittels eines additiven Verfahrens an der Außenwand des Vorkammer-Moduls (10) bzw. an der Außenwand des ersten Bauteils (10a) des Vorkammer-Moduls, insbesondere im Bereich um den Hohlraum (11), ein oder mehrere Rippen (60) ausgeformt werden.

19. Verfahren nach einem der vorstehenden Ansprüche, **dadurch gekennzeichnet, dass** das Vorkammer-Modul (10) bzw. das erste Bauteil (10a) des Vorkammer-Moduls (10) mit einem die Vorkammer ausbildenden Hohlraum (11) mittels des additiven Verfahrens erzeugt wird, und der Hohlraum (11) keine rotationssymmetrische Geometrie aufweist, insbesondere wird der Hohlraum (11) mit einer im Nahbereich der Kraftstoffzuführung, bevorzugt im Mündungsbereich des Verbindungskanals (31), mit einer volumenvergrössernden partiellen Aufweitung (14) ausgestattet.

20. Verbrennungsmotor, insbesondere Gasmotor, hergestellt nach einem Verfahren gemäß einem der Ansprüche 1 bis 19, **dadurch gekennzeichnet, dass** die Vorkammer als Zündverstärker dient.

21. Verbrennungsmotor, insbesondere Gasmotor, hergestellt nach einem Verfahren gemäß einem der Ansprüche 1 bis 19, **dadurch gekennzeichnet, dass** der Vorkammer-Injektor (33) ebenfalls zur Kraftstoffzuführung in den betreffenden Hauptbrennraum (7) über die Vorkammer dient, wobei der Vorkammer-Injektor (33) vorzugsweise derart ausgelegt ist, dass die zuführbare Kraftstoffmenge für einen Teillastbetrieb und/oder Volllastbetrieb ausschließlich über die Vorkammer zuführbar ist.
